# EUROPÄISCHE PATENTANMELDUNG

(11) **EP 4 765 514 A1**
(43) Veröffentlichungstag der Anmeldung: **24.06.2026**
(21) Anmeldenummer: 24222989.6
(22) Anmeldetag: 23.12.2024
(51) Int. Cl.: H01R 13/533, H01R 13/00

(54) **VERBINDUNGSSYSTEM SOWIE VERFAHREN ZUM VERBINDEN DES VERBINDUNGSSYSTEMS MIT EINEM KABEL**

(71) Anmelder: Gebauer & Griller Kabelwerke Gesellschaft m.b.H., 1190 Wien (AT)
(72) Erfinder: Veit, Stefan, 2251 Ebenthal (AT); Krall, Stephan, 2122 Riedenthal (AT)
(74) Vertreter: KLIMENT & HENHAPEL

(57) **Zusammenfassung**

Verbindungssystem (1) zur Verbindung eines Leiters (5) eines Kabels (2) mit einem Abnehmerkontakt (7), das Verbindungssystem (1) umfassend
- ein Leiterkontaktelement (12) mit
o einem ersten Verbindungsabschnitt (13) zur elektrischen Verbindung mit dem Leiter (5) des Kabels (2) sowie
o einem zweiten Verbindungsabschnitt (14) zur elektrischen Verbindung mit dem Abnehmerkontakt (7),

Um eine einfache und wirtschaftliche sowie effiziente Verbindung mit dem Kabel (2) zu gewährleisten, ist erfindungsgemäß vorgesehen, dass
das Verbindungssystem (1)

- einen Kontaktelementträger (24) mit
o einer von einem Fluid durchströmbaren Kühlkammer (8),
o einem mit der Kühlkammer (8) verbundenen Fluideingangsanschluss (10) sowie
o einem mit der Kühlkammer (8) verbundenen Fluidausgangsanschluss (11)
umfasst,
wobei das Leiterkontaktelement (12) thermisch mit der Kühlkammer (8) gekoppelt ist, um Wärme vom Leiterkontaktelement (12) an das durch die Kühlkammer (8) strömende Fluid abzugeben.

## Beschreibung

### GEBIET DER ERFINDUNG

Die vorliegende Erfindung betrifft ein Verbindungssystem zur Verbindung eines Leiters eines Kabels mit einem Abnehmerkontakt, das Verbindungssystem umfassend
- ein Leiterkontaktelement mit
   ∘ einem ersten Verbindungsabschnitt zur elektrischen Verbindung mit dem Leiter des Kabels sowie
   ∘ einem zweiten Verbindungsabschnitt zur elektrischen Verbindung mit dem Abnehmerkontakt.

Des Weiteren betrifft die vorliegende Erfindung ein Verfahren zum Verbinden des Verbindungssystems mit einem Kabel.

### STAND DER TECHNIK

Ein Leiter eines Kabels, durch den elektrischer Strom fließt, erzeugt Wärme - ein unvermeidbarer Effekt, der die Effizienz der Energieübertragung mindert. Diese Wärmeentwicklung, die als Joule'sche Verlustleistung bezeichnet wird, entsteht durch den Widerstand des Leitermaterials und die Intensität des Stroms. Dabei wächst die Verlustleistung mit dem Quadrat des Stroms - eine Verdoppelung des Stroms führt also zu einer Vervierfachung der erzeugten Wärme.

Um eine Überhitzung zu vermeiden, sind zwei Ansätze entscheidend: Entweder wird der Stromfluss begrenzt, um die entstehende Wärme gering zu halten, oder die überschüssige Wärme wird aktiv durch Kühlmaßnahmen abgeführt. Ein sorgfältig geplantes Wärmemanagement ist somit unerlässlich, insbesondere bei Anwendungen mit hohen Strömen, um eine effiziente Energieübertragung sicherzustellen.

Um die durch Stromfluss entstehende Wärme in Leitern zu reduzieren, sind aus dem Stand der Technik Kabel mit integriertem Kühlrohr bekannt. Bei einem solchen Kabel verläuft üblicherweise zentral ein Kühlrohr, das vom Leiter umgebend wird, wodurch eine gezielte Abfuhr der erzeugten Wärme ermöglicht wird. Durch den Transport eines Fluids, wie Wasser oder ein anderes wärmeleitendes Fluid, durch das Kühlrohr kann die Temperatur des Leiters effektiv reguliert werden, selbst bei hohen Strömen. Dies minimiert nicht nur die Joule'schen Verluste, sondern schützt auch die Materialstruktur vor thermischen Belastungen. Solche Kabel sind besonderes in Anwendungen von Bedeutung, wo sowohl Effizienz als auch Langlebigkeit essenziell sind. Insbesondere können solche Kabel für das Laden von Elektroautos zum Einsatz kommen.

Um die aus dem Stand der Technik bekannten gekühlten Kabel mit einem Abnehmerkontakt, beispielsweise mit einem Kontaktpin eines Steckers, verbinden zu können, muss das zentrale Kühlrohr im Verbindungsbereich jedoch aus dem Kabel weggeführt werden, um den Leiter zugänglich zu machen, sodass dieser über ein Leiterkontaktelement mit dem Abnehmerkontakt elektrisch gekoppelt werden kann.

Die notwendige Auftrennung zwischen Kühlrohr und Leiter ist allerdings problematisch. Ohne die thermische Anbindung an das Kühlrohr werden der Leiter und auch das Leiterkontaktelement im Verbindungsbereich nicht mehr ausreichend gekühlt. Dies führt zu einem deutlichen Temperaturanstieg im Verbindungsbereich; d.h. im Vergleich zum restlichen gekühlten Kabel treten hier Verluste auf, die die Effizienz stark beeinträchtigen.

### AUFGABE DER ERFINDUNG

Es ist daher eine Aufgabe der vorliegenden Erfindung, ein Verbindungssystem sowie ein Verfahren zum Verbinden des Verbindungssystems mit einem Kabel zur Verfügung zu stellen, die die Nachteile des Stands der Technik überwinden. Insbesondere soll das Verbindungssystem eine einfache und wirtschaftliche sowie effiziente Verbindung mit dem Kabel gewährleisten.

### DARSTELLUNG DER ERFINDUNG

Diese Aufgabe wird bei einem Verbindungssystem zur Verbindung eines Leiters eines Kabels mit einem Abnehmerkontakt, das Verbindungssystem umfassend
- ein Leiterkontaktelement mit
   ∘ einem ersten Verbindungsabschnitt zur elektrischen Verbindung mit dem Leiter des Kabels sowie
   ∘ einem zweiten Verbindungsabschnitt zur elektrischen Verbindung mit dem Abnehmerkontakt,

   erfindungsgemäß dadurch gelöst, dass
   das Verbindungssystem des Weiteren
- einen Kontaktelementträger mit
   ∘ einer von einem Fluid durchströmbaren Kühlkammer,
   ∘ einem mit der Kühlkammer verbundenen Fluideingangsanschluss zur Einleitung des Fluids in die Kühlkammer sowie
   ∘ einem mit der Kühlkammer verbundenen Fluidausgangsanschluss zur Ausleitung des Fluids aus der Kühlkammer
umfasst,
wobei das Leiterkontaktelement thermisch mit der Kühlkammer gekoppelt ist, um Wärme vom Leiterkontaktelement an das durch die Kühlkammer strömende Fluid abzugeben.

Das Verbindungssystem umfasst also zusammenfassend den Kontaktelementträger mit der Kühlkammer und dem Fluideingangs- und dem Fluidausgangsanschluss sowie das Leiterkontaktelement.

Mittels des Leiterkontaktelements kann der Leiter des Kabels mit dem Abnehmerkontakt elektrisch verbunden werden. Beim Abnehmerkontakt kann es sich um ein Kontaktelement eines Steckers, vorzugsweise um einen Kontaktpin, handeln.

Das Leiterkontaktelement kann
- eine Länge zwischen 10mm bis 50mm
- eine Breite zwischen 10mm und 50mm sowie
- eine Höhe zwischen 1mm und 5mm
aufweisen. Des Weiteren kann das Leiterkontaktelement jede beliebige Form haben.

Vorzugsweise weist ein Querschnitt (quer zu einer Längserstreckung) des Leiterkontaktelements eine Größe zwischen 10mm² und 250mm², bevorzugt zwischen 50mm² und 250mm², auf.

Der Fluideingangsanschluss und/oder der Fluidausgangsanschluss kann jeweils ein Rohr, insbesondere ein dornartiges oder zapfenartiges Rohr, aufweisen, das entweder einstückig oder lösbar mit der Kühlkammer verbunden ist. Des Weiteren ist es vorstellbar, dass der Fluideingangsanschluss und/oder der Fluidausgangsanschluss jeweils als Buchse ausgeführt ist.

An den Fluideingangsanschluss kann ein Zuflussrohr oder ein Kühlrohr des Kabels, vorzugsweise ein im Kabel zentral angeordnetes Kühlrohr, angeschlossen werden. Jedenfalls dient der Fluideingangsanschluss zur Einleitung des Fluids in die Kühlkammer.

An den Fluideingangsanschluss kann ein Abflussrohr oder das Kühlrohr des Kabels, vorzugsweise das im Kabel zentral angeordnete Kühlrohr, angeschlossen werden. In letzterem Fall fließt dann das Fluid von der Kühlkammer in das Kühlrohr des Kabels. Jedenfalls dient der Fluidausgangsanschluss zur Ableitung des Fluids aus der Kühlkammer.

Das erfindungsgemäße Verbindungssystem wird zur Kühlung des Leiterkontaktelements verwendet, um trotz eines hohen Stromflusses durch das über das Leiterkontaktelement mit dem Abnehmerkontakt gekoppelte Kabel eine niedrigere Temperatur - auch im Bereich des Leiterkontaktelements - zu gewährleisten.

Insbesondere kann das Verbindungssystem bei einem Ladekabel eines Elektrofahrzeugs, bevorzugt eines Elektroautos, zum Einsatz kommen. Konkret verbindet das Verbindungssystem das entsprechende Ladekabel mit einem Stecker. Beim Laden von Elektrofahrzeugen treten mitunter hohe Spannungen und Stromstärken auf, weshalb eine entsprechende Kühlung des Leiterkontaktelements von essentieller Bedeutung ist. Mittels des erfindungsgemäßen Verbindungssystems lassen sich Spannungen im Bereich von 400 Volt bis 1200 Volt sowie Stromstärken zwischen 200 Ampere und 3000 Ampere, bevorzugt zwischen 500 Ampere und 1500 Ampere, realisieren bzw. im Wesentlichen verlustfrei übertragen.

Aufgrund der thermischen Koppelung zwischen Leiterkontaktelement und Kühlkammer wird das Leiterkontaktelement in einem Betriebszustand optimal gekühlt.

Wärme wird vom Leiterkontaktelement an das im Betriebszustand durch die Kühlkammer strömende Fluid abgegeben, wodurch die Temperatur des Leiterkontaktelements niedrig gehalten wird.

Beim Betriebszustand handelt es sich um jenen Zustand, in welchem das Verbindungssystem mit dem Leiter des Kabels, mit einem Zuflussrohr, insbesondere mit dem Kühlrohr des Kabels, und einem Abflussrohr sowie mit dem Abnehmerkontakt verbunden ist, d.h. um den Zustand, in dem einerseits Strom fließen und in dem andererseits das Fluid strömen kann.

Hinzukommt, dass durch die Verwendung des erfindungsgemäßen Verbindungssystems das Kabel einfach, schnell und ohne größere Materialverluste an das Verbindungssystem angebunden werden kann, insbesondere dann, wenn das Kühlrohr des Kabels an den Fluideingangsanschluss angebunden wird. Bei den aus dem Stand der Technik bekannten Lösungen muss bei der Herstellung der Verbindung mit dem Leiterkontaktelement üblicherweise ein deutlich längerer Abschnitt des Leiters vom Kühlrohr entfernt werden. Beim erfindungsgemäßen Verbindungssystem entfällt dies komplett. Der Leiter muss lediglich zu dem mit der Kühlkammer gekoppelten Leiterkontaktelement geführt werden. D.h. die Verwendung des Verbindungssystems erhöht die Wirtschaftlichkeit des Kabels.

Damit das Leiterkontaktelement in der Praxis einfach, schnell und zuverlässig mit der Kühlkammer thermisch gekoppelt werden kann, ist in einer Ausführungsvariante der Erfindung vorgesehen, dass der Kontaktelementträger eine Kontaktierungskammer, in der das Leiterkontaktelement angeordnet ist, umfasst, wobei die Kontaktierungskammer
- zumindest eine erste Öffnung zur Durchführung des Leiters des Kabels und
- zumindest eine zweite Öffnung zur Durchführung des Abnehmerkontakts
aufweist.

Des Weiteren wird das Leiterkontaktelement durch die Kontaktierungskammer auch vor Umwelteinflüssen, beispielsweise vor Feuchtigkeit und/oder mechanischer Belastung, geschützt.

Durch die beiden Öffnungen der Kontaktierungskammer werden der Leiter des Kabels und der Abnehmerkontakt definiert zum Leiterkontaktelement geführt.

Auch wird der erste Verbindungsabschnitt und der zweite Verbindungsabschnitt durch die Kontaktierungskammer geschützt, sodass die Verbindung zwischen Kabel und Leiterkontaktelement und die Verbindung zwischen Leiterkontaktelement und Abnehmerkontakt bei Belastung bzw. Manipulation des Kabels und des Abnehmers, vorzugsweise des Steckers, keine Schädigung erfahren.

Damit eine optimale Wärmeübertragung zwischen der Kühlkammer und dem Leiterkontaktelement stattfinden kann, ist es vorteilhaft, wenn das Leiterkontaktelement nahe an der Kühlkammer angeordnet ist. Dadurch kann im Betriebszustand möglichst viel Wärme an das durch die Kühlkammer strömende Fluid abgegeben werden. Deshalb ist in einer weiteren Ausführungsvariante der Erfindung vorgesehen, dass die Kontaktierungskammer derart benachbart zur Kühlkammer angeordnet ist, dass ein Wandabschnitt der Kühlkammer gleichzeitig einen Wandabschnitt der Kontaktierungskammer ausbildet. D.h. die Kühlkammer und die Kontaktierungskammer teilen sich einen Wandabschnitt.

Vorzugsweise ist das sich in der Kontaktierungskammer befindliche Leiterkontaktelement zumindest abschnittsweise an diesem Wandabschnitt angeordnet.

Der Wandabschnitt wird zumindest teilweise von der Kontaktierungskammer abgedeckt.

Neben der optimierten Wärmeübertragung kann durch diesen Wandabschnitt auch Material eingespart werden, wodurch das Verbindungssystem wirtschaftlicher herstellbar ist.

In einer weiteren Ausführungsvariante der Erfindung ist vorgesehen, dass die Kontaktierungskammer zwei einander gegenüberliegende Aufnahmemittel, vorzugsweise Leisten oder Nuten, umfasst, mittels welcher das Leiterkontaktelement in der Kontaktierungskammer führbar und vorzugsweise fixierbar ist.

Mittels der Aufnahmemittel kann das Leiterkontaktelement, vorzugsweise durch die erste Öffnung, in die Kontaktierungskammer eingeschoben werden.

Bevorzugt sind die Aufnahmemittel derart passgenau gefertigt, dass das Leiterkontaktelement durch die Aufnahmemittel in alle Richtungen gesichert ist. D.h. auch ein Herausrutschen des Leiterkontaktelements aus der Kontaktierungskammer, insbesondere durch die erste Öffnung, kann verhindert werden.

Beispielsweise handelt es sich bei den Aufnahmemitteln um Leisten, die von Wandabschnitten der Kontaktierungskammer in das Innere der Kontaktierungskammer abragen, oder um Nuten, die in Wandabschnitten der Kontaktierungskammer ausgebildet sind.

Damit das Verbindungssystem einfach und wirtschaftlich herstellbar ist, ist in einer weiteren Ausführungsvariante der Erfindung vorgesehen, dass die Kühlkammer und die Kontaktierungskammer einstückig ausgebildet sind. Hierdurch kann Material eingespart werden.

Des Weiteren ist eine einstückige Fertigung auch deshalb vorteilhaft, da Kühlkammer und Kontaktierungskammer beim Anschließen des Kabels nicht gesondert zusammengebaut werden müssen. D.h. bei der Montage kann Zeit eingespart werden.

Damit das Leiterkontaktelement einfach und sicher in der Kontaktierungskammer positionierbar ist, kann es vorteilhaft sein, wenn beim Zusammenbau des Verbindungssystems die Kontaktierungskammer und die Kühlkammer voneinander getrennt sind. Dann kann das Leiterkontaktelement losgelöst von der Kühlkammer in die Kontaktierungskammer eingelegt bzw. eingeführt werden. Deshalb ist in einer weiteren Ausführungsvariante der Erfindung vorgesehen, dass die Kühlkammer und die Kontaktierungskammer zweistückig ausgebildet sind und formschlüssig, vorzugsweise mittels Nut-Feder-Verbindung, miteinander verbunden sind.

Nachdem das Leiterkontaktelement in der Kontaktierungskammer positioniert ist und vorzugsweise mit dem Leiter des Kabels sowie mit dem Abnehmerkontakt vorher bereits verbunden wurde, wird die Kontaktierungskammer mit der Kühlkammer verbunden. Bevorzugt kommt hierbei eine Nut-Feder-Verbindung, beispielsweise ein Klicksystem, zum Einsatz. Dies ermöglicht eine einfache und sichere Verbindung zwischen Kontaktierungskammer und Kühlkammer.

Um im Betriebszustand eine gute Wärmeübertragung zwischen dem Leiterkontaktelement und dem Fluid zu ermöglichen, ist in einer weiteren Ausführungsvariante der Erfindung vorgesehen, dass die Kühlkammer aus einem Kunststoffmaterial, bevorzugt aus einem Polymermatrix-Verbundwerkstoff, ausgebildet ist und vorzugsweise mittels Spritzgießen hergestellt ist.

Beim Kunststoffmaterial kann es sich um einen reinen Kunststoff handeln oder um eine Kunststoffmatrix, die mit Füllstoffen versehen ist.

Bevorzugt handelt es sich um einen Polymermatrix-Verbundwerkstoff, der einen Füllstoff, beispielsweise eine Vielzahl kurzer oder durchgehender Fasern und/oder eine Vielzahl von Partikeln, umfasst, die durch eine Matrix aus zumindest einem Polymer zusammengehalten werden.

Vorzugsweise kommen Glasfasern zum Einsatz, die in eine Polyamid 66 Matrix eingebettet sind. Die Wärmeleitfähigkeit kann hierbei in etwa bei 0,27 W/mK liegen. Das Volumen der Glasfasern kann in einem Bereich zwischen 25% und 50% liegen.

Um eine optimale Wärmeübertragung zu erzielen, können mineralische oder keramische Füllstoffe in eine Polymermatrix eingebettet werden. Die Füllstoffe können als Partikel und/oder als Fasern vorliegen. Beispielsweise kann es sich bei den Füllstoffen um Aluminiumoxide, Aluminiumnitride, Siliziumcarbide, Magnesiumoxide und/oder Aluminiumsilikate handeln. Diese Füllstoffe sind thermisch hoch leitfähig und können in eine Polyamid 66 Matrix eingebettet werden, welche Matrix elektrisch isolierend wirkt. Mit diesen Kombinationen lässt sich eine optimale Wärmeleitfähigkeit von (weit) über 0,27 W/mK erzielen.

Zumindest der Wandabschnitt der Kühlkammer kann aus dem Kunststoffmaterial, bevorzugt aus dem Polymermatrix-Verbundwerkstoff, ausgebildet sein.

Um die Kühlkammer mittels vollautomatisierten Verfahrens und mit hoher Reproduziergenauigkeit herzustellen, kann Spritzgießen zum Einsatz kommen. Dadurch lässt sich die Kühlkammer besonders wirtschaftlich herstellen, da keine oder nur eine geringe Nachbearbeitung notwendig ist. Des Weiteren lässt sich die Oberflächenstruktur exakt anpassen.

Um an den Fluideingangsanschluss und/oder an den Fluidausgangsanschluss einfach und zuverlässig ein Zuflussrohr, vorzugsweise das Kühlrohr des Kabels, und/oder ein Abflussrohr anbinden zu können, ist in einer weiteren Ausführungsvariante der Erfindung vorgesehen, dass der Fluideingangsanschluss und/oder der Fluidausgangsanschluss jeweils ein Anbindungsmittel aufweist.

Beim Anbindungsmittel kann es sich um einen Hohlkörper, vorzugsweise um ein Rohr, handeln, das entweder integral mit der Kühlkammer gefertigt ist oder lösbar mit der Kühlkammer verbunden ist.

In einer weiteren Ausführungsvariante der Erfindung ist vorgesehen, dass das Anbindungsmittel als ein mit der Kühlkammer lösbar verbundenes Rohr ausgestaltet ist und der Fluideingangsanschluss und/oder der Fluidausgangsanschluss vorzugsweise jeweils eine Nut zur Aufnahme eines Dichtelements aufweisen.

Damit im Betriebszustand kein Fluid austritt, kann der Fluideingangsanschluss und/oder der Fluidausgangsanschluss jeweils zumindest eine Nut aufweisen, in der ein Dichtelement, vorzugsweise ein O-Ring, applizierbar ist.

Diese Ausführungsform ermöglicht einen einfachen Anschluss des Zuflussrohrs und/oder des Abflussrohrs, da das Zufluss- und/oder Abflussrohr zunächst jeweils mit einem Rohr verbunden wird, vorzugsweise wird jeweils ein Rohr in das Zufluss- und/oder Abflussrohr abschnittsweise eingeführt, und anschließend wird das entsprechende Rohr abschnittsweise in die Kühlkammer eingeführt.

In einer weiteren Ausführungsvariante der Erfindung ist vorgesehen, dass das Rohr
- einen Anbindungsabschnitt zur Anbindung an ein Zuflussrohr oder Abflussrohr und
- einen Einführungsabschnitt zum Einführen in die Kühlkammer umfasst, wobei der Anbindungsabschnitt auf einer Oberfläche vorzugsweise ein Zapfenprofil aufweist.

D.h. das Rohr befindet sich im Betriebszustand abschnittsweise im Zufluss- bzw. Abflussrohr und abschnittsweise in der Kühlkammer.

Der Anbindungsabschnitt kann auf der äußeren Oberfläche des Rohrs ein Zapfenprofil aufweisen. Dies ist einerseits vorteilhaft, weil das Zapfenprofil abdichtet und eine Austritt des Fluids verhindert, und andererseits, weil es ein Verrutschen bzw. Abrutschen des am Rohr angeordneten Zufluss- bzw. Abflussrohrs verhindert.

Damit das Verbindungssystem möglichst wenige einzelne Teile aufweist, ist in einer weiteren Ausführungsvariante der Erfindung vorgesehen, dass das Anbindungsmittel als ein einstückig mit der Kühlkammer ausgebildetes Rohr ausgestaltet ist. Hierdurch entfällt beim Zusammenbau ein Arbeitsschritt, da das Rohr bereits mit der Kühlkammer verbunden ist.

Damit das Zuflussrohr bzw. das Abflussrohr zuverlässig und sicher mit dem einstückig mit der Kühlkammer ausgebildeten Rohr verbunden und abgedichtet ist, ist in einer weiteren Ausführungsvariante der Erfindung vorgesehen, dass das Rohr einen Anbindungsabschnitt zur Anbindung an ein Zuflussrohr oder Abflussrohr umfasst, wobei der Anbindungsabschnitt auf einer Oberfläche ein Zapfenprofil aufweist.

Um Strömungsverluste zu reduzieren und Turbulenzen des Fluids zu minimieren, ist in einer weiteren Ausführungsvariante der Erfindung vorgesehen, dass eine Mittelachse des Fluideingangsanschlusses parallel, vorzugsweise koaxial, zu einer Mittelachse des Fluidausgangsanschlusses ausgerichtet ist. Dadurch wird die Kühlung des Leiterkontaktelements noch effizienter.

Durch die symmetrische Ausrichtung der Anschlüsse wird die Konstruktion des Verbindungssystems platzsparender, was insbesondere bei beengten Einbauverhältnissen vorteilhaft ist.

Des Weiteren kann, insbesondere die koaxiale Ausrichtung, die Integration des Verbindungssystems in bestehende Kabel- und Stecker-Verbindungen erleichtern. Zusätzlich kann die parallele Ausrichtung der Mittelachsen mechanische Belastungen, wie Druck- oder Zugkräfte, besser aufnehmen und reduziert potenzielle Belastungspunkte an Verbindungsstellen. Außerdem erleichtert die Ausrichtung der Anschlüsse die Montage des Zufluss- bzw. des Abflussrohrs und reduziert die Wahrscheinlichkeit von Fehlmontagen.

Um das Verbindungssystem auch bei räumlich begrenzten bzw. spezifisch ausgerichteten Kabeln, Steckern und/oder Kühlkreisläufen einsetzen zu können, ist in einer weiteren Ausführungsvariante der Erfindung vorgesehen, dass eine Mittelachse des Fluideingangsanschlusses und eine Mittelachse des Fluidausgangsanschlusses in einer Ebene liegen und einen Winkel zwischen 80° und 100°, vorzugsweise zwischen 85° und 95°, besonders bevorzugt von 90°, einschließen.

Der Winkelbereich zwischen 80° und 100° minimiert allzu abrupte Strömungsänderungen des Fluids, wodurch Turbulenzen reduziert werden. Trotz des Winkelbereichs kann dadurch eine effiziente Kühlung des Leiterkontaktelements sichergestellt werden.

Um eine besonders gute und effiziente Wärmeübertragung zwischen Leiterkontaktelement und Fluid sicherzustellen, ist in einer weiteren Ausführungsvariante der Erfindung vorgesehen, dass das Leiterkontaktelement quaderförmig ausgebildet ist und flächig an einem Wandabschnitt der Kühlkammer anliegt, wobei der zweite Verbindungsabschnitt des Leiterkontaktelements vorzugsweise eine Bohrung aufweist, in die der Abnehmerkontakt, bevorzugt ein Kontaktpin eines Steckers, abschnittsweise einführbar ist, um eine elektrische Verbindung herzustellen.

Durch die quaderförmige Ausgestaltung des Leiterkontaktelements und das flächige Anliegen an einem Wandabschnitt der Kühlkammer wird eine optimale thermische Kopplung realisiert. Die flächige Kontaktierung erhöht zudem die Stabilität des Leiterkontaktelements, wodurch das Risiko von Beschädigungen oder Lockerungen, beispielsweise durch Vibrationen, reduziert wird. Außerdem ermöglich die quaderförmige Ausgestaltung des Leiterkontaktelements eine platzsparende Konstruktion der Kühlkammer sowie vorzugsweise der Kontaktierungskammer, wodurch das Verbindungssystem flexibel einsetzbar und wirtschaftlich produzierbar ist.

Die Bohrung im zweiten Verbindungsabschnitt ermöglicht eine einfache und präzise Einführung des Abnehmerkontakts, wie z. B. eines Kontaktpins eines Steckers. Dies erleichtert die Montage und gewährleistet eine zuverlässige elektrische Verbindung. Die Bohrung kann mit unterschiedlichen Abnehmerkontakten kompatibel gestaltet werden, was die Flexibilität und Anwendbarkeit des Verbindungssystems in verschiedenen Energieversorgungssystemen erhöht.

In einer weiteren Ausführungsvariante der Erfindung ist vorgesehen, dass das Leiterkontaktelement abschnittsweise einen zwei Schenkel und einen die beiden Schenkel verbindenden Basisabschnitt umfassenden Querschnitt aufweist, wobei ein Schenkel flächig an einem Wandabschnitt der Kühlkammer anliegt.

Insbesondere ist es vorteilhaft, wenn der zweite Verbindungsabschnitt den oben genannten Querschnitt aufweist. Vorzugsweise ist der Querschnitt im Wesentlichen u-förmig ausgebildet.

Dabei kann die elektrische Kontaktierung mit dem Abnehmerkontakt hergestellt werden, in dem der Abnehmerkontakt in das durch die beiden Schenkel und den Basisabschnitt definierte Volumen eingeführt wird.

Vorzugsweise werden die beiden Schenkel dann an den Abnehmerkontakt angepresst. Ebenso ist es möglich, dass zumindest einer der beiden Schenkel mit dem Abnehmerkontakt verklebt, verlötet oder verschweißt wird. Es ist auch vorstellbar, dass die beiden Schenkel derart passgenau gefertigt sind, dass nur das Einschieben des Abnehmerkontakts bereits für eine elektrische Kontaktierung ausreicht.

Es ist vorstellbar, dass der erste Verbindungsabschnitt dieser Ausführungsvariante derart gefertigt ist, dass er mittels der Aufnahmemittel in der Kontaktierungskammer führbar und vorzugsweise fixierbar ist. Bevorzugt ist der erste Verbindungsabschnitt quaderförmig ausgestaltet.

Des Weiteren ist ein Energieversorgungsystem umfassend ein erfindungsgemäßes Verbindungssystem und ein Kabel vorgesehen, wobei das Kabel
- ein Kühlrohr,
- einen das Kühlrohr zumindest abschnittsweise umgebenden Leiter sowie
- einen den Leiter und das Kühlrohr umgebenden Außenmantel umfasst, wobei der Leiter mit dem ersten Verbindungsabschnitt des Leiterkontaktelements verbunden ist und der Abnehmerkontakt mit dem zweiten Verbindungsabschnitt des Leiterkontaktelements verbunden ist.

Unter dem Kühlrohr wird im Rahmen der Erfindung ein Hohlkörper aus einem flexiblen Material, beispielsweise aus Kunststoff, verstanden. Vorzugsweise handelt es sich um ein schlauchartiges Kühlrohr. Jedenfalls muss das Kabel trotz des Kühlrohrs flexibel sein.

Der Leiter des Kabels ist stoffschlüssig und/oder formschlüssig und/oder kraftschlüssig mit dem Leiterkontaktelement verbunden. Vorzugsweise ist der Leiter mit dem Leiterkontaktelement gecrimpt, geschweißt, gelötet oder geklebt. Es ist aber auch vorstellbar, dass der Leiter in das Leiterkontaktelement gesteckt oder geklippt ist.

Vorzugsweise ist das Kühlrohr des Kabels an den Fluideingangsanschluss des Kontaktelementträgers angebunden. Es ist aber auch vorstellbar, dass das Kühlrohr des Kabels an den Fluidausgangsanschluss angebunden ist. Ebenso ist es vorstellbar, dass weder der Fluideingangsanschluss noch der Fluidausgangsanschluss mit dem Kühlrohr verbunden sind, sondern mit einem externen, anderen Kühlkreislauf verbunden sind.

Bevorzugt strömt das Fluid im Betriebszustand vom Kühlrohr des Kabels über den Fluideingangsanschluss in die Kühlkammer und von der Kühlkammer über den Fluidausgangsanschluss in ein Abflussrohr, wobei das Fluid mittels des Abflussrohrs über eine Kühleinheit zum Kühlrohr rückgeführt wird.

Beispielsweise kann das Kühlrohr des Kabels, das Verbindungssystem, insbesondere die Kühlkammer, sowie das Abflussrohr an einen Kühlkreislauf eines Elektrofahrzeugs gekoppelt sein. Es kann sich jedoch auch um einen vom Elektrofahrzeug abgesonderten Kühlkreislauf handeln, mit welchem das Verbindungssystem verbunden ist.

Bevorzugt ist der Leiter des Kabels durch die erste Öffnung in die Kontaktierungskammer geführt und der Abnehmerkontakt durch die zweite Öffnung in die Kontaktierungskammer geführt.

Hinsichtlich der Vorteile der Kontaktierungskammer wird an dieser Stelle an die obigen Ausführungen verwiesen.

Zur Lösung eingangs genannter Problemstellung ist erfindungsgemäß auch ein Verfahren zum Verbinden
- eines Verbindungssystems aufweisend einen Kontaktelementträger und ein Leiterkontaktelement, der Kontaktelementträger umfassend
   o eine Kühlkammer,
   o einen mit der Kühlkammer verbundenen Fluideingangsanschluss und
   o einen mit der Kühlkammer verbundenen Fluidausgangsanschluss
   mit
- einem Kabel, das Kabel umfassend
   ∘ ein Kühlrohr,
   ∘ einen das Kühlrohr zumindest abschnittsweise umgebenden Leiter sowie
   ∘ einen den Leiter und das Kühlrohr umgebenden Außenmantel,
vorgesehen, wobei das Verfahren die folgenden Verfahrensschritte aufweist:
- abschnittsweises Freilegen des Leiters des Kabels vom Außenmantel,
- gegebenenfalls Ablängen des Kühlrohrs,
- Anbinden des Kühlrohrs an den Fluideingangsanschluss des Kontaktelementträgers,
- Verbinden des Leiters mit dem Leiterkontaktelement,
- Koppeln des Leiterkontaktelements mit der Kühlkammer des Kontaktelementträgers,
- gegebenenfalls Anbinden eines Abflussrohrs an den Fluidausgangsanschluss des Kontaktelementträgers.

Hinsichtlich der Vorteile, insbesondere betreffend das Anbinden des Kühlrohrs an den Fluideingangsanschluss, wird auf obige Ausführungen verwiesen.

Damit das Leiterkontaktelement optimal geschützt ist, ist in einer Ausführungsvariante des Verfahrens vorgesehen, dass der Kontaktelementträger eine Kontaktierungskammer umfasst, wobei das Leiterkontaktelement nach dem Verbinden mit dem Leiter in die Kontaktierungskammer eingeschoben und vorzugsweise fixiert wird, um das Leiterkontaktelement thermisch mit der Kühlkammer zu koppeln.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische axonometrische Ansicht eines ersten Ausführungsbeispiels betreffend einen Kontaktelementträger eines erfindungsgemäßen Verbindungssystems;
- Fig. 2: eine schematische Schnittansicht des in Fig. 1 gezeigten ersten Ausführungsbeispiels;
- Fig. 3: eine schematische axonometrische Ansicht eines zweiten Ausführungsbeispiels betreffend ein Energieversorgungssystem;
- Fig. 4: eine schematische Schnittansicht des in Fig. 4 gezeigten zweiten Ausführungsbeispiels;
- Fig. 5: eine schematische Explosionsdarstellung eines dritten Ausführungsbeispiels betreffend ein Energieversorgungssystem;
- Fig. 6: eine schematische Explosionsdarstellung des zweiten Ausführungsbeispiels;
- Fig. 7: eine schematische axonometrische Ansicht eines vierten Ausführungsbeispiels betreffend einen Kontaktelementträger des erfindungsgemäßen Verbindungssystems;
- Fig. 8: eine schematische axonometrische Ansicht eines fünften Ausführungsbeispiels betreffend einen Kontaktelementträger des erfindungsgemäßen Verbindungssystems;
- Fig. 9: eine schematische axonometrische Ansicht eines sechsten Ausführungsbeispiels betreffend einen Kontaktelementträger des erfindungsgemäßen Verbindungssystems;
- Fig. 10: eine schematische axonometrische Ansicht eines siebenten Ausführungsbeispiels betreffend zwei Energieversorgungssysteme;
- Fig. 11: eine schematische axonometrische Ansicht eines achten Ausführungsbeispiels betreffend ein Energieversorgungssystem;
- Fig. 12: eine schematische Explosionsdarstellung des siebenten Ausführungsbeispiels;
- Fig. 13: eine schematische Explosionsdarstellung des siebenten Ausführungsbeispiels;
- Fig. 14: eine schematische axonometrische Ansicht des Kabels und des Leiterkontaktelements des siebenten Ausführungsbeispiels;
- Fig. 15: eine schematische axonometrische Ansicht des siebenten Ausführungsbeispiels;
- Fig. 16: eine schematische axonometrische Ansicht des Kontaktelementträgers des siebenten Ausführungsbeispiels;
- Fig. 17: eine schematische axonometrische Ansicht des Energieversorgungssystems des siebenten Ausführungsbeispiels;
- Fig. 18: eine schematische axonometrische Ansicht des Energieversorgungssystems des siebenten Ausführungsbeispiels;
- Fig. 19: eine schematische axonometrische Ansicht des Verbindungssystems des siebenten Ausführungsbeispiels;
- Fig. 20: ein schematisches Diagramm betreffend mehrere Temperaturverläufe;
- Fig. 21: eine schematische Ansicht eines Kühlkreislaufs. WEGE ZUR AUSFÜHRUNG DER ERFINDUNG

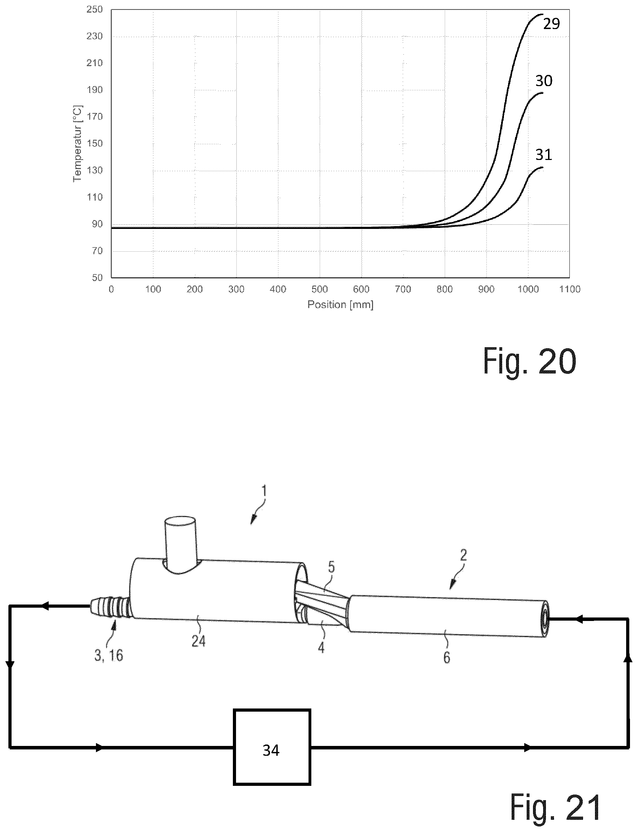

Fig. 20 zeigt ein schematisches Diagramm, in welchem Temperaturverläufe, die bei verschiedenen Verbindungen eines gekühlten Kabels 2 mit definiertem Querschnitt (bei den gezeigten Verbindungen immer 50mm²) mit einem Abnehmerkontakt 7 auftreten, dargestellt sind. Ganz allgemein lässt sich daraus ableiten, dass die Temperatur im Bereich der Verbindung rasant ansteigt, je weiter eine Kühlung entfernt ist.

Konkret betrifft die erste Linie einen Temperaturverlauf 29 bei einer aus dem Stand der Technik bekannten Verbindung, bei welcher ein zentral im Kabel 2 angeordnetes Kühlrohr 4, ca. 5 cm bevor ein Leiter 5 des Kabels 2 mit einem Leiterkontaktelement 12 verbunden wird, aus seiner mittigen Position vom Kabel 2 und vom Leiterkontaktelement 12 weggeführt wird. Die Temperatur im Bereich des Leiterkontaktelements 12 steigt hierbei auf nahezu 250°C an. Im Vergleich dazu beträgt die Temperatur im Bereich des gekühlten Kabels 2 ca. 85°C.

Die zweite Linie zeigt ebenfalls einen Temperaturverlauf 30 bei einer aus dem Stand der Technik bekannten Verbindung, bei welcher das zentral im Kabel 2 angeordnete Kühlrohr 4, ca. 2,5 cm bevor der Leiter 5 des Kabels 2 mit dem Leiterkontaktelement 12 verbunden wird, aus seiner mittigen Position vom Kabel 2 und vom Leiterkontaktelement 12 weggeführt wird. Die Temperatur im Bereich des Leiterkontaktelements 12 steigt hierbei immer noch auf ca. 190°C an.

Die dritte Linie stellt einen Temperaturverlauf 31 bei einem erfindungsgemäßen Verbindungssystem 1 dar. Hierbei steigt die Temperatur im Bereich des Leiterkontaktelements 12 auf lediglich 130°C an. D.h. im Vergleich zum Temperaturverlauf 29 ist die Temperatur beim erfindungsgemäßen Verbindungssystems 1 im Bereich des Leiterkontaktelements 12 nahezu halbiert.

Mit dem erfindungsgemäßen Verbindungssystem 1 kann also ein hoher Stromfluss durch ein über ein Leiterkontaktelement 12 mit einem Abnehmerkontakt 7 verbundenes Kabel 2 bei gleichzeitig niedriger Temperatur realisiert werden. D.h. bei Verwendung des erfindungsgemäßen Verbindungssystems 1 treten kaum Verluste auf.

Das erfindungsgemäße Verbindungssystem 1 umfasst einen Kontaktelementträger 24 sowie das Leiterkontaktelement 12.

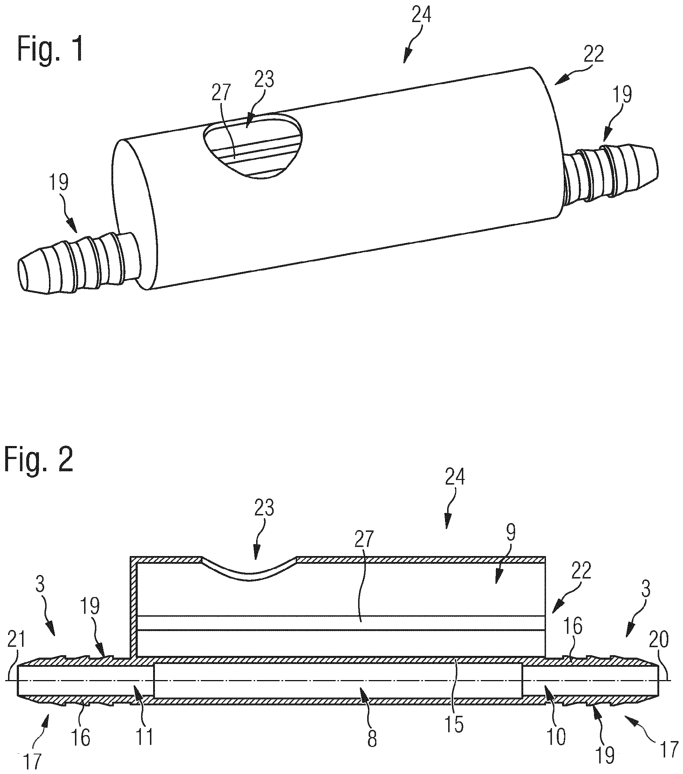

Ein erstes Ausführungsbeispiel des Kontaktelementträgers 24 ist in Fig. 1 und Fig. 2 gezeigt, wobei in Fig. 1 eine schematische axonometrische Ansicht sichtbar ist und in Fig. 2 eine schematische Schnittansicht. Der Kontaktelementträger 24 umfasst eine Kühlkammer 8 sowie einen mit der Kühlkammer 8 fluidisch verbundenen Fluideingangsanschluss 10 und einen fluidisch mit der Kühlkammer 8 verbundenen Fluidausgangsanschluss 11. Über der Kühlkammer 8 befindet sich eine Kontaktierungskammer 9, in der das Leiterkontaktelement 12 anordenbar ist.

Konkret weist die Kontaktierungskammer 9 zwei Öffnungen 22,23 auf, wobei durch die erste Öffnung 22 der Leiter 5 des Kabels 2 geführt werden kann und durch die zweite Öffnung 23 der Abnehmerkontakt 7.

Die Kontaktierungskammer 9 ist derart benachbart zur Kühlkammer 8 angeordnet, dass sich die Kontaktierungskammer 9 und die Kühlkammer 8 einen Wandabschnitt 15 teilen. Die Kontaktierungskammer 9 umfasst zwei einander gegenüberliegenden Aufnahmemittel 27, die im ersten Ausführungsbeispiel als Leisten ausgeführt sind, um das Leiterkontaktelement 12 zu führen und zu fixieren.

Im ersten Ausführungsbeispiel sind die Kontaktierungskammer 9 und die Kühlkammer 8 einstückig ausgebildet und aus einem Polymermatrix-Verbundwerkstoff mittels Spritzgießen hergestellt.

Der Fluideingangsanschluss 10 und der Fluidausgangsanschluss 11 weisen jeweils ein Anbindungsmittel 3 auf, das im ersten Ausführungsbeispiel jeweils als ein einstückig mit der Kühlkammer 8 ausgebildetes Rohr 16 ausgestaltet ist. Jedes Rohr 16 umfasst einen Anbindungsabschnitt 17 zur Anbindung an ein Zufluss- oder Abflussrohr, wobei der Anbindungsabschnitt 17 auf einer äußeren Oberfläche ein Zapfenprofil 19 aufweist.

Im ersten Ausführungsbeispiel sind eine Mittelachse 20 des Fluideingangsanschlusses 10 und eine Mittelachse 21 des Fluidausgangsanschlusses 11 koaxial ausgerichtet.

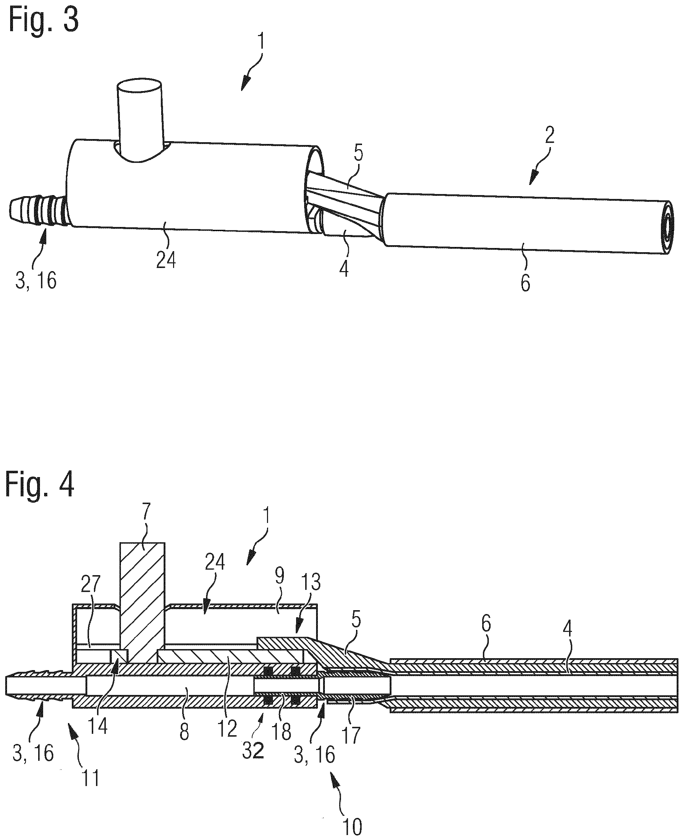

Fig. 3 und Fig. 4 zeigen ein zweites Ausführungsbeispiel. In den beiden Figuren ist schematisch ein Energieversorgungssystem dargestellt, das ein Verbindungssystem 1 sowie ein Kabel 2 und einen Abnehmerkontakt 7 umfasst.

Das Verbindungssystem 1 des zweiten Ausführungsbeispiels umfasst einen Kontaktelementträger 24, der bis auf folgende Unterschiede dem im ersten Ausführungsbeispiel gezeigten Kontaktelementträger 24 entspricht:
- Der Fluideingangsanschluss 10 ist im zweiten Ausführungsbeispiel als mit der Kühlkammer 8 lösbar verbundenes Rohr 16 ausgestaltet.
- Das Rohr 16 des Fluideingangsanschlusses 10 weist den mit dem Zapfenprofil 19 versehenen Anbindungsabschnitt 16 sowie einen Einführungsabschnitt 18, der in die Kühlkammer 8 ragt, auf.
- Des Weiteren weist der Fluideinganganschluss 10 zwei umlaufende Nuten 32 auf, in welchen jeweils ein Dichtelement, nämlich ein O-Ring, angeordnet ist.

Des Weiteren umfasst das Verbindungssystem 1 das Leiterkontaktelement 12, das in der Kontaktierungskammer 9 angeordnet ist.

Das Leiterkontaktelement 12 ist im zweiten Ausführungsbeispiel quaderförmig ausgebildet und liegt flächig am Wandabschnitt 15 an. Zur Verbindung mit dem Leiter 2 des Kabels 2 und dem Abnehmerkontakt 7 weist das Leiterkontaktelement 12 zwei Verbindungsabschnitt 13,14 auf, nämlich den ersten Verbindungsabschnitt 13, mit welchem der Leiter 5 verbunden ist, und den zweiten Verbindungsabschnitt 14, der eine Bohrung aufweist, in welche der als Kontaktpin eines Steckers ausgestaltete Abnehmerkontakt 7 abschnittsweise eingeführt ist.

Das über den Leiter 5 mit dem Leiterkontaktelement 12 verbundene Kabel 2 umfasst das mittig angeordnete Kühlrohr 4, das vom Leiter 5 umgeben wird, der wiederum von einem Außenmantel 6 umgeben wird.

Das Kühlrohr 4 ist am Fluideingangsanschluss 10, insbesondere am Anbindungsabschnitt 17 des Rohrs 16, angebunden. D.h. im Betriebszustand wird das durch das Kühlrohr 5 strömende Fluid über den Fluideingangsanschluss 10 an die Kühlkammer 8 übergeben und fließt anschließend über den Fluidausgangsanschluss 11 in ein nicht dargestelltes, mit dem Fluidausgangsanschluss 11 verbundenes Abflussrohr.

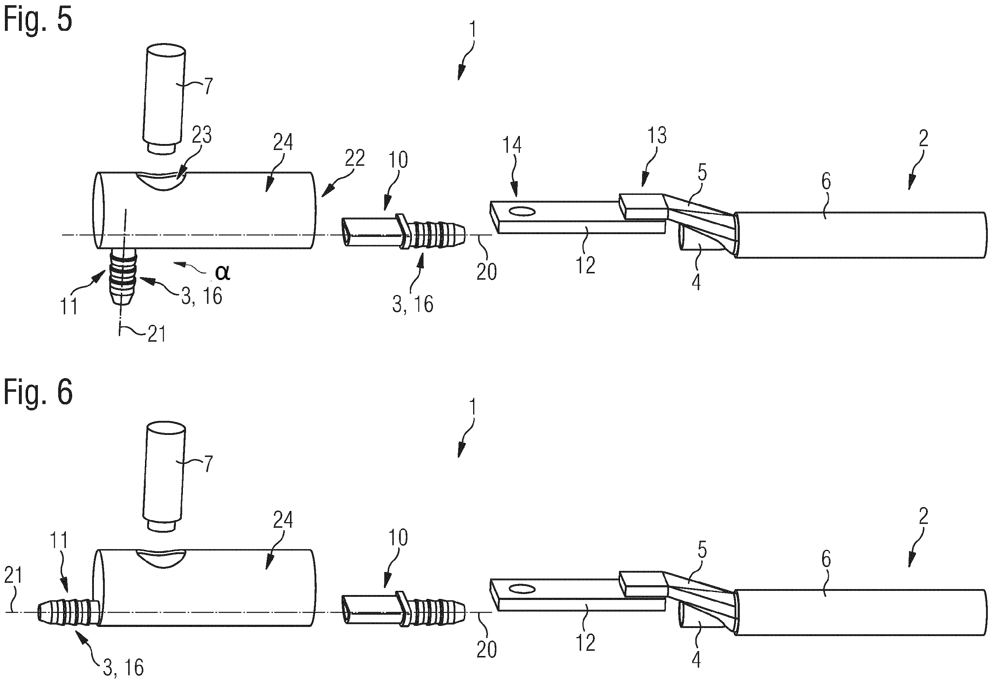

In Fig. 6 ist eine schematische Explosionsdarstellung des zweiten Ausführungsbeispiels zu sehen.

Die in Fig. 5 gezeigte Explosionsdarstellung (drittes Ausführungsbeispiel) entspricht im Wesentlichen der in Fig. 6 gezeigten schematischen Explosionsdarstellung mit dem folgenden Unterschied:
- Die Mittelachse 20 des Fluideingangsanschlusses 10 und die Mittelachse 21 des Fluidausgangsanschlusses 11 schließen einen Winkel α von 90° ein.

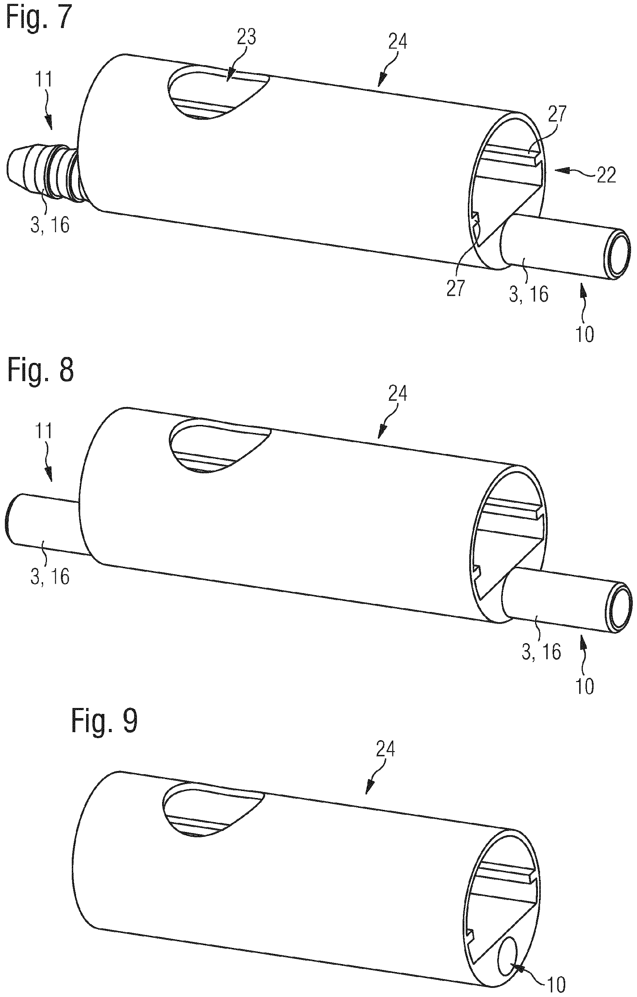

Fig. 7, Fig. 8 und Fig. 9 zeigen jeweils ein weiteres Ausführungsbeispiel des Kontaktelementträgers 24.

Konkret stellt Fig. 7 eine schematische axonometrische Ansicht eines vierten Ausführungsbeispiels dar, das einen Kontaktelementträger 24 betrifft, der im Wesentlichen dem Kontaktelementträger 24 des ersten Ausführungsbeispiels entspricht, mit folgendem Unterschied:
- die Oberfläche des Rohrs 16 des Fluideingangsanschlusses 10 ist glatt und weist demnach kein Zapfenprofil 19 auf.

In Fig. 8 ist eine schematische axonometrische Ansicht eines fünften Ausführungsbeispiels sichtbar, das einen Kontaktelementträger 24 betrifft, der im Wesentlichen dem Kontaktelementträger 24 des ersten Ausführungsbeispiels entspricht, mit folgendem Unterschied:
- die Oberfläche des Rohrs 16 des Fluideingangsanschlusses 10 und die Oberfläche des Rohrs 16 des Fluidausgangsanschlusses 11 sind jeweils glatt. D.h. beide Rohre 16 weisen kein Zapfenprofil 19 auf.

Fig. 9 zeigt eine schematische Ansicht eines sechsten Ausführungsbeispiels, das einen Kontaktelementträger 24 betrifft, der im Wesentlichen dem Kontaktelementträger 24 des ersten Ausführungsbeispiels entspricht, mit folgendem Unterschied:
- sowohl der Fluideingangsanschluss 10 als auch der Fluidausgangsanschluss 11 sind als Buchse ausgebildet und umfassen demnach kein Rohr 16.

Das erfindungsgemäße Verbindungssystem 1 kann auch mehrstückig, vorzugsweise paarweise, nebeneinander angeordnet werden, wobei die mehreren Verbindungssysteme 1 vorzugsweise von einer gemeinsamen Hülle 28 umgeben und zusammengehalten werden.

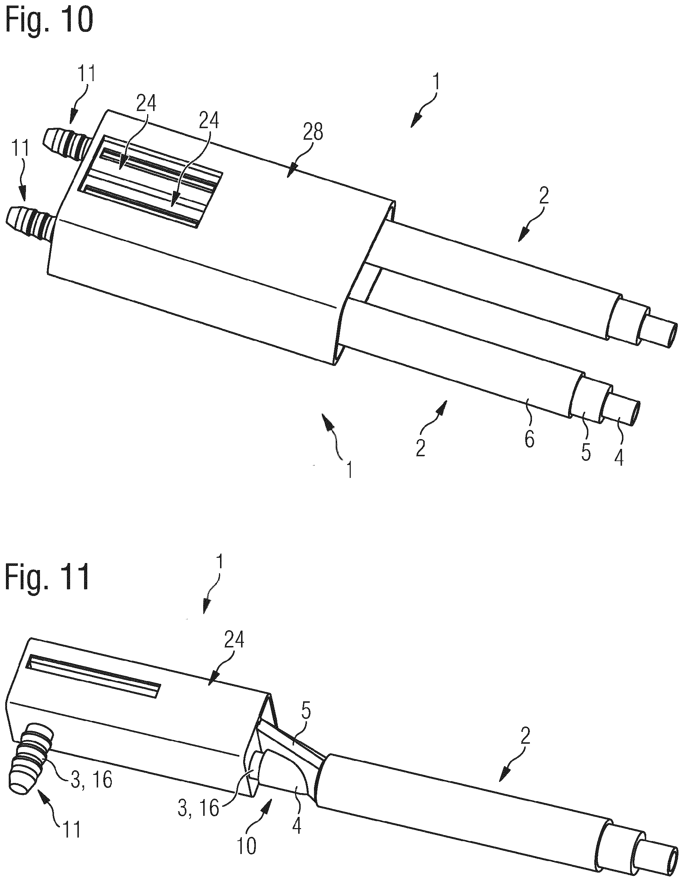

In Fig. 10 (siebentes Ausführungsbeispiel) ist solch eine Anordnung zweier Verbindungssysteme 1, die von einer gemeinsamen Hülle 28 umgeben werden, dargestellt. Konkret zeigt Fig. 10 eine schematische axonometrische Ansicht von zwei nebeneinander angeordneten Verbindungssystemen 1, die jeweils mit dem Leiter 5 und dem Kühlrohr 4 eines Kabels 2 verbunden sind. D.h. in Fig. 10 sind zwei Energieversorgungssysteme sichtbar.

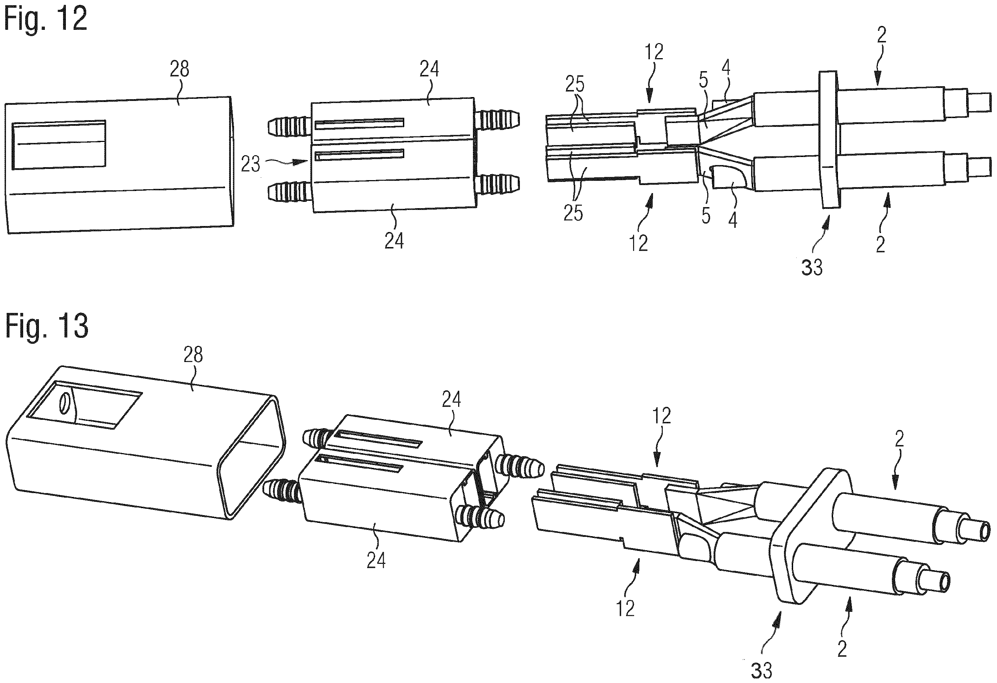

Entsprechende schematische Explosionsdarstellungen sind in Fig. 12 und Fig. 13 sichtbar. Zusätzlich ist in diesen Explosionsdarstellungen auch eine Kabelführung 33 sichtbar, mittels welcher die Kabel 2 zueinander in Position, d.h. entsprechend voneinander beabstandet, gehalten werden.

Jedes dieser Energieversorgungssysteme entspricht im Wesentlichen dem in Fig. 3 gezeigten Energieversorgungssystem (zweites Ausführungsbeispiel) mit folgenden Unterschieden:
- Der zweite Verbindungsabschnitt 14 des Leiterkontaktelements 12 des in den Fig. 10, 12 und 13 dargestellten siebenten Ausführungsbeispiels ist im Wesentlichen u-förmig ausgebildet. D.h. der zweite Verbindungsabschnitt 14 weist zwei Schenkel 25 und einen die Schenkel 25 verbindenden Basisabschnitt 26 auf.
- Der erste Verbindungsabschnitt 13 des Leiterkontaktelements 12 ist hingegen quaderförmig ausgebildet und ist mittels der Aufnahmemittel 27 in der Kontaktierungskammer 9 führbar und fixierbar.
- Einer der beiden Schenkel 25 liegt im zusammengebauten Zustand der Energieversorgungssysteme flächig an dem Wandabschnitt 15 der Kühlkammer 8 an, siehe insbesondere Fig. 13.
- Der Abnehmerkontakt 7 ist in keiner dieser Figuren dargestellt. Dieser kann im siebenten Ausführungsbeispiel über die schlitzförmig ausgebildete zweite Öffnung 23 der Kontaktierungskammer 9 in das durch die beiden Schenkel 25 und den Basisabschnitt 26 definierte Aufnahmevolumen des zweiten Verbindungsabschnitts 14 eingeführt und mit dem zweiten Verbindungsabschnitt 14, insbesondere mit den Schenkeln 25, kontaktiert werden.

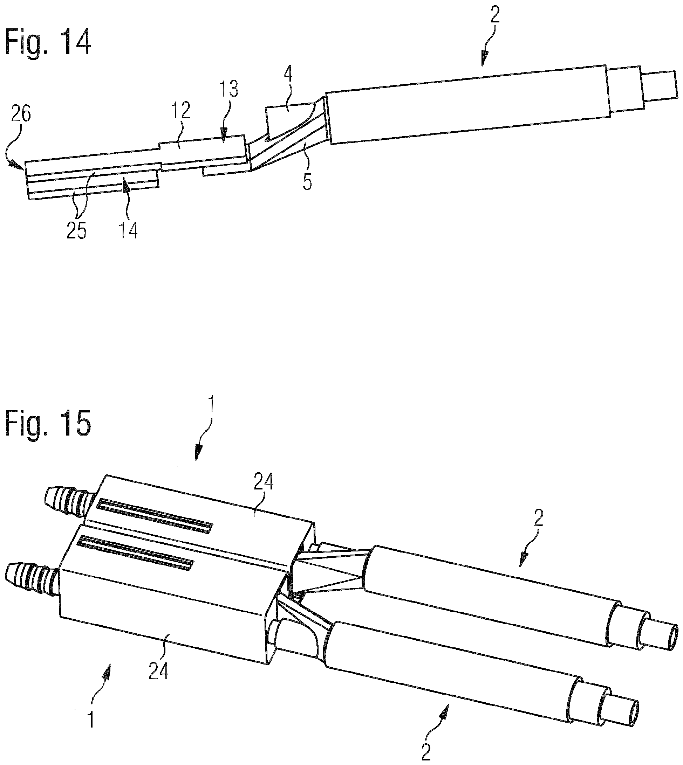

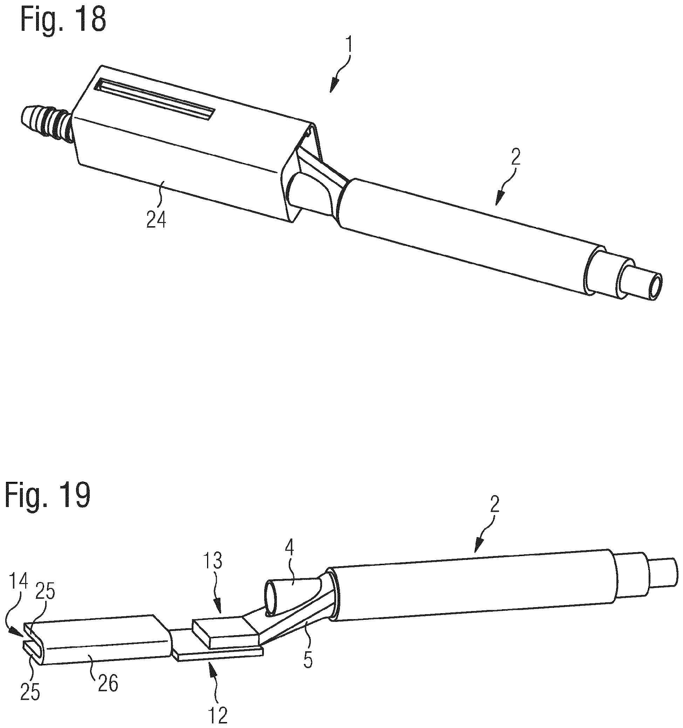

Eine axonometrische Detailansicht des mit dem Leiter 5 des Kabel 2 verbundenen Leiterkontaktelements 12 ist in Fig. 14 und in Fig. 19 dargestellt.

Fig. 11 zeigt eine schematische axonometrische Ansicht eines achten Ausführungsbeispiels, das ein Energieversorgungsystem betrifft, das im Wesentlichen mit den Energieversorgungssystemen des siebenten Ausführungsbeispiels übereinstimmt, jedoch folgenden Unterschied aufweist:
- die Mittelachse 20 des Fluideingangsanschlusses 10 und die Mittelachse 21 des Fluidausgangsanschlusses 11 schließen einen Winkel α von 90° ein.

Fig. 15 zeigt eine schematische axonometrische Ansicht des siebenten Ausführungsbeispiels (zwei Energieversorgungssysteme), jedoch ist im Vergleich zu bspw. Fig. 10 die Hülle 28 nicht dargestellt.

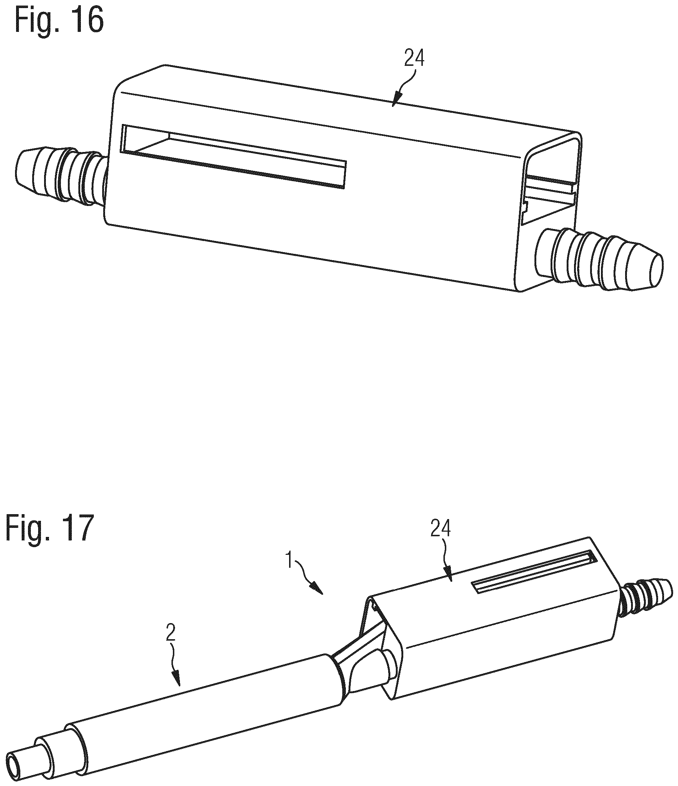

In Fig. 16 ist eine axonometrische Ansicht des Kontaktelementträgers 24 des siebenten Ausführungsbeispiels dargestellt.

Fig. 17 und Fig. 18 zeigen jeweils eine axonometrische Ansicht eines einzelnen Energieversorgungssystems des siebenten Ausführungsbeispiels.

Fig. 21 stellt eine schematische Ansicht eines in einen Kühlkreislauf eingebundenen Energieversorgungssystems dar. Der Kühlkreislauf umfasst eine Kühleinheit 34, mittels welcher das im Kühlkreislauf zirkulierende Fluid abgekühlt wird. Bei dem Kühlkreislauf kann es sich um einen in einem Elektrofahrzeug bereits vorhandenen Kühlkreislauf handeln, in welchen das Energieversorgungssystem eingebunden wurde, oder um einen externen, von einem Elektrofahrzeug losgelösten Kühlkreislauf.

### BEZUGSZEICHENLISTE

- 1: Verbindungssystem
- 2: Kabel
- 3: Anbindungsmittel
- 4: Kühlrohr
- 5: Leiter
- 6: Außenmantel
- 7: Abnehmerkontakt
- 8: Kühlkammer
- 9: Kontaktierungskammer
- 10: Fluideingangsanschluss
- 11: Fluidausgangsanschluss
- 12: Leiterkontaktelement
- 13: erster Verbindungsabschnitt
- 14: zweiter Verbindungsabschnitt
- 15: Wandabschnitt der Kühlkammer 8
- 16: Rohr
- 17: Anbindungsabschnitt
- 18: Einführungsabschnitt
- 19: Zapfenprofil
- 20: Mittelachse des Fluideingangsanschlusses 10
- 21: Mittelachse des Fluidausgangsanschlusses 11
- 22: erste Öffnung der Kontaktierungskammer 9
- 23: zweite Öffnung der Kontaktierungskammer 9
- 24: Kontaktelementträger
- 25: Schenkel des Leiterkontaktelements 12
- 26: Basisabschnitt des Leiterkontaktelements 12
- 27: Aufnahmemittel
- 28: Hülle
- 29: Temperaturverlauf eines aus dem Stand der Technik bekannten Verbindungssystems
- 30: Temperaturverlauf eines weiteren aus dem Stand der Technik bekannten Verbindungssystems
- 31: Temperaturverlauf des erfindungsgemäßen Verbindungssystems 1
- 32: Nut
- 33: Kabelführung

- α: Winkel zwischen der Mittelachse 20 und der Mittelachse 21

## Patentansprüche

1. Verbindungssystem (1) zur Verbindung eines Leiters (5) eines Kabels (2) mit einem Abnehmerkontakt (7), das Verbindungssystem (1) umfassend
- ein Leiterkontaktelement (12) mit
∘ einem ersten Verbindungsabschnitt (13) zur elektrischen Verbindung mit dem Leiter (5) des Kabels (2) sowie
∘ einem zweiten Verbindungsabschnitt (14) zur elektrischen Verbindung mit dem Abnehmerkontakt (7),
**dadurch gekennzeichnet, dass**
das Verbindungssystem (1) des Weiteren
- einen Kontaktelementträger (24) mit
∘ einer von einem Fluid durchströmbaren Kühlkammer (8),
∘ einem mit der Kühlkammer (8) verbundenen Fluideingangsanschluss (10) zur Einleitung des Fluids in die Kühlkammer (8) sowie
∘ einem mit der Kühlkammer (8) verbundenen Fluidausgangsanschluss (11) zur Ausleitung des Fluids aus der Kühlkammer (8)
umfasst, wobei das Leiterkontaktelement (12) thermisch mit der Kühlkammer (8) gekoppelt ist, um Wärme vom Leiterkontaktelement (12) an das durch die Kühlkammer (8) strömende Fluid abzugeben.

2. Verbindungssystem (1) nach Anspruch 1, **dadurch gekennzeichnet, dass** der Kontaktelementträger (24) eine Kontaktierungskammer (9), in der das Leiterkontaktelement (12) angeordnet ist, umfasst, wobei die Kontaktierungskammer (9)
- zumindest eine erste Öffnung (22) zur Durchführung des Leiters (5) des Kabels (2) und
- zumindest eine zweite Öffnung (23) zur Durchführung des Abnehmerkontakts (7)
aufweist.

3. Verbindungssystem (1) nach Anspruch 2, **dadurch gekennzeichnet, dass** die Kontaktierungskammer (9) derart benachbart zur Kühlkammer (8) angeordnet ist, dass ein Wandabschnitt (15) der Kühlkammer (8) gleichzeitig einen Wandabschnitt der Kontaktierungskammer (9) ausbildet.

4. Verbindungssystem (1) nach einem der Ansprüche 2 bis 3, **dadurch gekennzeichnet, dass** die Kontaktierungskammer (9) zwei einander gegenüberliegende Aufnahmemittel (27), vorzugsweise Leisten oder Nuten, umfasst, mittels welcher das Leiterkontaktelement (12) in der Kontaktierungskammer (9) führbar und vorzugsweise fixierbar ist.

5. Verbindungssystem (1) nach einem der Ansprüche 2 bis 4, **dadurch gekennzeichnet, dass** die Kühlkammer (8) und die Kontaktierungskammer (9) einstückig ausgebildet sind.

6. Verbindungssystem (1) nach einem der Ansprüche 2 bis 4, **dadurch gekennzeichnet, dass** die Kühlkammer (8) und die Kontaktierungskammer (9) zweistückig ausgebildet sind und formschlüssig, vorzugsweise mittels Nut-Feder-Verbindung, miteinander verbunden sind.

7. Verbindungssystem (1) nach einem der Ansprüche 1 bis 6, **dadurch gekennzeichnet, dass** die Kühlkammer (8) aus einem Kunststoffmaterial, bevorzugt aus einem Polymermatrix-Verbundwerkstoff, ausgebildet ist und vorzugsweise mittels Spritzgießen hergestellt ist.

8. Verbindungssystem (1) nach einem der Ansprüche 1 bis 7, **dadurch gekennzeichnet, dass** der Fluideingangsanschluss (10) und/oder der Fluidausgangsanschluss (11) jeweils ein Anbindungsmittel (3) aufweist.

9. Verbindungssystem (1) nach Anspruch 8, **dadurch gekennzeichnet, dass** das Anbindungsmittel (3) als ein mit der Kühlkammer (8) lösbar verbundenes Rohr (16) ausgestaltet ist und der Fluideingangsanschluss (10) und/oder der Fluidausgangsanschluss (11) vorzugsweise jeweils eine Nut (32) zur Aufnahme eines Dichtelements aufweist.

10. Verbindungssystem (1) nach Anspruch 9, **dadurch gekennzeichnet, dass** das Rohr (16)
- einen Anbindungsabschnitt (17) zur Anbindung an ein Zuflussrohr oder Abflussrohr und
- einen Einführungsabschnitt (18) zum Einführen in die Kühlkammer (8)
umfasst, wobei der Anbindungsabschnitt (17) auf einer Oberfläche vorzugsweise ein Zapfenprofil (19) aufweist.

11. Verbindungssystem (1) nach Anspruch 8, **dadurch gekennzeichnet, dass** das Anbindungsmittel (3) als ein einstückig mit der Kühlkammer (8) ausgebildetes Rohr (16) ausgestaltet ist.

12. Verbindungssystem (1) nach Anspruch 11, **dadurch gekennzeichnet, dass** das Rohr (16) einen Anbindungsabschnitt (17) zur Anbindung an ein Zuflussrohr oder Abflussrohr umfasst, wobei der Anbindungsabschnitt (17) auf einer Oberfläche ein Zapfenprofil (19) aufweist.

13. Verbindungssystem (1) nach einem der Ansprüche 1 bis 12, **dadurch gekennzeichnet, dass** eine Mittelachse (20) des Fluideingangsanschlusses (10) parallel, vorzugsweise koaxial, zu einer Mittelachse (21) des Fluidausgangsanschlusses (11) ausgerichtet ist.

14. Verbindungssystem (1) nach einem der Ansprüche 1 bis 12, **dadurch gekennzeichnet, dass** eine Mittelachse (20) des Fluideingangsanschlusses (10) und eine Mittelachse (21) des Fluidausgangsanschlusses (11) in einer Ebene liegen und einen Winkel (α) zwischen 80° und 100°, vorzugsweise zwischen 85° und 95°, besonders bevorzugt von 90°, einschließen.

15. Verbindungssystem (1) nach einem der Ansprüche 1 bis 14, **dadurch gekennzeichnet, dass** das Leiterkontaktelement (12) quaderförmig ausgebildet ist und flächig an einem Wandabschnitt (15) der Kühlkammer (8) anliegt, wobei der zweite Verbindungsabschnitt (14) des Leiterkontaktelements (12) vorzugsweise eine Bohrung aufweist, in die der Abnehmerkontakt (7), bevorzugt ein Kontaktpin eines Steckers, abschnittsweise einführbar ist, um eine elektrische Verbindung herzustellen.

16. Verbindungssystem (1) nach einem der Ansprüche 1 bis 14, **dadurch gekennzeichnet, dass** das Leiterkontaktelement (12) abschnittsweise einen zwei Schenkel (25) und einen die beiden Schenkel (25) verbindenden Basisabschnitt (26) umfassenden Querschnitt aufweist, wobei ein Schenkel (25) flächig an einem Wandabschnitt (15) der Kühlkammer (8) anliegt.

17. Energieversorgungsystem umfassend ein Verbindungssystem (1) nach einem der Ansprüche 1 bis 16 und ein Kabel (2), das Kabel (2) umfassend
- ein Kühlrohr (4),
- einen das Kühlrohr (4) zumindest abschnittsweise umgebenden Leiter (5) sowie
- einen den Leiter (5) und das Kühlrohr (4) umgebenden Außenmantel (6),
**dadurch gekennzeichnet, dass**
der Leiter (5) mit dem ersten Verbindungsabschnitt (13) des Leiterkontaktelements (12) verbunden ist und der Abnehmerkontakt (7) mit dem zweiten Verbindungsabschnitt (14) des Leiterkontaktelements (12) verbunden ist.

18. Verfahren zum Verbinden
- eines Verbindungssystems (1) aufweisend einen Kontaktelementträger (24) und ein Leiterkontaktelement (12), der Kontaktelementträger (24) umfassend
∘ eine Kühlkammer (8),
∘ einen mit der Kühlkammer (8) verbundenen Fluideingangsanschluss (10) und
∘ einen mit der Kühlkammer (8) verbundenen Fluidausgangsanschluss (11)
mit
- einem Kabel (2), das Kabel (2) umfassend
∘ ein Kühlrohr (4),
∘ einen das Kühlrohr (4) zumindest abschnittsweise umgebenden Leiter (5) sowie
∘ einen den Leiter (5) und das Kühlrohr (4) umgebenden Außenmantel (6),
wobei das Verfahren die folgenden Verfahrensschritte aufweist:
- abschnittsweises Freilegen des Leiters (5) des Kabels (2) vom Außenmantel (6),
- gegebenenfalls Ablängen des Kühlrohrs (4),
- Anbinden des Kühlrohrs (4) an den Fluideingangsanschluss (10) des Kontaktelementträgers (24),
- Verbinden des Leiters (5) mit dem Leiterkontaktelement (12),
- Koppeln des Leiterkontaktelements (12) mit der Kühlkammer (8) des Kontaktelementträgers (24),
- gegebenenfalls Anbinden eines Abflussrohrs an den Fluidausgangsanschluss (11) des Kontaktelementträgers (24) .

19. Verfahren nach Anspruch 18, **dadurch gekennzeichnet, dass** der Kontaktelementträger (24) eine Kontaktierungskammer (9) umfasst, wobei das Leiterkontaktelement (12) nach dem Verbinden mit dem Leiter (5) in die Kontaktierungskammer (9) eingeschoben und vorzugsweise fixiert wird, um das Leiterkontaktelement (12) thermisch mit der Kühlkammer (8) zu koppeln.

## Geänderte Patentansprüche

### Geänderte Patentansprüche gemäss Regel 137(2) EPÜ.

1. Verbindungssystem (1) zur Verbindung eines Leiters (5) eines Kabels (2) mit einem Abnehmerkontakt (7), das Verbindungssystem (1) umfassend
- ein Leiterkontaktelement (12) mit
∘ einem ersten Verbindungsabschnitt (13) zur elektrischen Verbindung mit dem Leiter (5) des Kabels (2) sowie
∘ einem zweiten Verbindungsabschnitt (14) zur elektrischen Verbindung mit dem Abnehmerkontakt (7),
**dadurch gekennzeichnet, dass**
das Verbindungssystem (1) des Weiteren
- einen Kontaktelementträger (24) mit
∘ einer von einem Fluid durchströmbaren Kühlkammer (8),
∘ einem mit der Kühlkammer (8) verbundenen Fluideingangsanschluss (10) zur Einleitung des Fluids in die Kühlkammer (8) und zur Anbindung an ein Kühlrohr (4) des Kabels (2) sowie
∘ einem mit der Kühlkammer (8) verbundenen Fluidausgangsanschluss (11) zur Ausleitung des Fluids aus der Kühlkammer (8)
umfasst, wobei das Leiterkontaktelement (12) thermisch mit der Kühlkammer (8) gekoppelt ist, um Wärme vom Leiterkontaktelement (12) an das durch die Kühlkammer (8) strömende Fluid abzugeben,
wobei der Kontaktelementträger (24) eine Kontaktierungskammer (9), in der das Leiterkontaktelement (12) angeordnet ist, umfasst, wobei die Kontaktierungskammer (9)
- zumindest eine erste Öffnung (22) zur Durchführung des Leiters (5) des Kabels (2) und
- zumindest eine zweite Öffnung (23) zur Durchführung des Abnehmerkontakts (7)
aufweist,
wobei die Kontaktierungskammer (9) derart benachbart zur Kühlkammer (8) angeordnet ist, dass ein Wandabschnitt (15) der Kühlkammer (8) gleichzeitig einen Wandabschnitt der Kontaktierungskammer (9) ausbildet.

2. Verbindungssystem (1) nach Anspruch 1, **dadurch gekennzeichnet, dass** die Kontaktierungskammer (9) zwei einander gegenüberliegende Aufnahmemittel (27), vorzugsweise Leisten oder Nuten, umfasst, mittels welcher das Leiterkontaktelement (12) in der Kontaktierungskammer (9) führbar und vorzugsweise fixierbar ist.

3. Verbindungssystem (1) nach einem der Ansprüche 1 bis 2, **dadurch gekennzeichnet, dass** die Kühlkammer (8) und die Kontaktierungskammer (9) einstückig ausgebildet sind.

4. Verbindungssystem (1) nach einem der Ansprüche 1 bis 2, **dadurch gekennzeichnet, dass** die Kühlkammer (8) und die Kontaktierungskammer (9) zweistückig ausgebildet sind und formschlüssig, vorzugsweise mittels Nut-Feder-Verbindung, miteinander verbunden sind.

5. Verbindungssystem (1) nach einem der Ansprüche 1 bis 4, **dadurch gekennzeichnet, dass** die Kühlkammer (8) aus einem Kunststoffmaterial, bevorzugt aus einem Polymermatrix-Verbundwerkstoff, ausgebildet ist und vorzugsweise mittels Spritzgießen hergestellt ist.

6. Verbindungssystem (1) nach einem der Ansprüche 1 bis 5, **dadurch gekennzeichnet, dass** der Fluideingangsanschluss (10) und/oder der Fluidausgangsanschluss (11) jeweils ein Anbindungsmittel (3) aufweist.

7. Verbindungssystem (1) nach Anspruch 6, **dadurch gekennzeichnet, dass** das Anbindungsmittel (3) als ein mit der Kühlkammer (8) lösbar verbundenes Rohr (16) ausgestaltet ist und der Fluideingangsanschluss (10) und/oder der Fluidausgangsanschluss (11) vorzugsweise jeweils eine Nut (32) zur Aufnahme eines Dichtelements aufweist.

8. Verbindungssystem (1) nach Anspruch 7, **dadurch gekennzeichnet, dass** das Rohr (16)
- einen Anbindungsabschnitt (17) zur Anbindung an ein Zuflussrohr oder Abflussrohr und
- einen Einführungsabschnitt (18) zum Einführen in die Kühlkammer (8)
umfasst, wobei der Anbindungsabschnitt (17) auf einer Oberfläche vorzugsweise ein Zapfenprofil (19) aufweist.

9. Verbindungssystem (1) nach Anspruch 6, **dadurch gekennzeichnet, dass** das Anbindungsmittel (3) als ein einstückig mit der Kühlkammer (8) ausgebildetes Rohr (16) ausgestaltet ist.

10. Verbindungssystem (1) nach Anspruch 9, **dadurch gekennzeichnet, dass** das Rohr (16) einen Anbindungsabschnitt (17) zur Anbindung an ein Zuflussrohr oder Abflussrohr umfasst, wobei der Anbindungsabschnitt (17) auf einer Oberfläche ein Zapfenprofil (19) aufweist.

11. Verbindungssystem (1) nach einem der Ansprüche 1 bis 10, **dadurch gekennzeichnet, dass** eine Mittelachse (20) des Fluideingangsanschlusses (10) parallel, vorzugsweise koaxial, zu einer Mittelachse (21) des Fluidausgangsanschlusses (11) ausgerichtet ist.

12. Verbindungssystem (1) nach einem der Ansprüche 1 bis 10, **dadurch gekennzeichnet, dass** eine Mittelachse (20) des Fluideingangsanschlusses (10) und eine Mittelachse (21) des Fluidausgangsanschlusses (11) in einer Ebene liegen und einen Winkel (α) zwischen 80° und 100°, vorzugsweise zwischen 85° und 95°, besonders bevorzugt von 90°, einschließen.

13. Verbindungssystem (1) nach einem der Ansprüche 1 bis 12, **dadurch gekennzeichnet, dass** das Leiterkontaktelement (12) quaderförmig ausgebildet ist und flächig an einem Wandabschnitt (15) der Kühlkammer (8) anliegt, wobei der zweite Verbindungsabschnitt (14) des Leiterkontaktelements (12) vorzugsweise eine Bohrung aufweist, in die der Abnehmerkontakt (7), bevorzugt ein Kontaktpin eines Steckers, abschnittsweise einführbar ist, um eine elektrische Verbindung herzustellen.

14. Verbindungssystem (1) nach einem der Ansprüche 1 bis 12, **dadurch gekennzeichnet, dass** das Leiterkontaktelement (12) abschnittsweise einen zwei Schenkel (25) und einen die beiden Schenkel (25) verbindenden Basisabschnitt (26) umfassenden Querschnitt aufweist, wobei ein Schenkel (25) flächig an einem Wandabschnitt (15) der Kühlkammer (8) anliegt.

15. Energieversorgungsystem umfassend ein Verbindungssystem (1) nach einem der Ansprüche 1 bis 14 und ein Kabel (2), das Kabel (2) umfassend
- das Kühlrohr (4),
- den das Kühlrohr (4) zumindest abschnittsweise umgebenden Leiter (5) sowie
- einen den Leiter (5) und das Kühlrohr (4) umgebenden Außenmantel (6),
**dadurch gekennzeichnet, dass**
der Leiter (5) mit dem ersten Verbindungsabschnitt (13) des Leiterkontaktelements (12) verbunden ist und der Abnehmerkontakt (7) mit dem zweiten Verbindungsabschnitt (14) des Leiterkontaktelements (12) verbunden ist.

16. Verfahren zum Verbinden
- eines Verbindungssystems (1) aufweisend einen Kontaktelementträger (24) und ein Leiterkontaktelement (12), der Kontaktelementträger (24) umfassend
∘ eine Kühlkammer (8),
∘ einen mit der Kühlkammer (8) verbundenen Fluideingangsanschluss (10) und
∘ einen mit der Kühlkammer (8) verbundenen Fluidausgangsanschluss (11)
mit
- einem Kabel (2), das Kabel (2) umfassend
∘ ein Kühlrohr (4),
∘ einen das Kühlrohr (4) zumindest abschnittsweise umgebenden Leiter (5) sowie
∘ einen den Leiter (5) und das Kühlrohr (4) umgebenden Außenmantel (6),
wobei das Verfahren die folgenden Verfahrensschritte aufweist:
- abschnittsweises Freilegen des Leiters (5) des Kabels (2) vom Außenmantel (6),
- gegebenenfalls Ablängen des Kühlrohrs (4),
- Anbinden des Kühlrohrs (4) an den Fluideingangsanschluss (10) des Kontaktelementträgers (24),
- Verbinden des Leiters (5) mit dem Leiterkontaktelement (12),
- Koppeln des Leiterkontaktelements (12) mit der Kühlkammer (8) des Kontaktelementträgers (24),
- gegebenenfalls Anbinden eines Abflussrohrs an den Fluidausgangsanschluss (11) des Kontaktelementträgers (24),
wobei der Kontaktelementträger (24) eine Kontaktierungskammer (9) umfasst, wobei das Leiterkontaktelement (12) nach dem Verbinden mit dem Leiter (5) in die Kontaktierungskammer (9) eingeschoben und vorzugsweise fixiert wird, um das Leiterkontaktelement (12) thermisch mit der Kühlkammer (8) zu koppeln.
